# EUROPEAN PATENT SPECIFICATION

(11) **EP 0 819 876 B1**
(45) Date of publication and mention of the grant of the patent: **11.12.2002**
(21) Application number: 96115029.9
(22) Date of filing: 19.09.1996
(51) Int. Cl.: F16K 1/44

(54) **Double sealed valve**
Doppelsitzventil
Soupape à double siège

(30) Priority: 15.07.1996 JP 18488696; 15.07.1996 JP 18488796; 15.07.1996 JP 18488896; 15.07.1996 JP 18488996; 15.07.1996 JP 18489096
(43) Date of publication of application: 21.01.1998
(73) Proprietor: Toyo Stainless Steel Industries Co., Ltd., Tsuyama-shi, Okayama (JP)
(72) Inventor: Ozawa, Kaoru, c/o Toyo Stainless Steel Ind Co, Ltd, Tsuyama-shi, Okayama (JP)
(74) Representative: Füchsle, Klaus, Dipl.-Ing.

(56) References cited:
- EP-A- 0 039 319
- EP-A- 0 174 384
- DE-U- 8 524 858

## Description

### FIELD OF THE INVENTION

The present invention relates to a double sealed valve for use with liquid flow lines in a machine or a plant for food production, brewing, distilling, or the like. In particular, the invention relates to valve structure with liquid passages sealed doubly to prevent the liquids flowing through the passages, respectively, from mixing with each other.

### BACKGROUND OF THE INVENTION

A conventional double sealed valve of this type includes a valve seat in a communicating passage, which is formed between an upper passage and a lower passage. The valve also includes a first vertical valve stem and a second vertical valve stem. The first stem has a first valve plug for vertically slidable engagement with an inner peripheral surface of the seat through a primary annular packing member, which is fitted to the first plug. The second stem has a second valve plug for compressive engagement with an upper surface of the seat through a secondary annular packing member, which is fitted to the second plug. The plugs can be opened and closed by properly driving the stems with a valve drive mechanism. Each of the packing members is made of rubber, and held in the annular groove formed in the surface of the associated packing member which faces the seat.

The downward movement of the second valve plug brings the secondary annular packing member into compressive engagement with the upper surface of the valve seat. Therefore, when the second plug closes, only a compressive force acts on the secondary packing member, and no shear force acts. On the other hand, the vertical movement of the first valve plug brings the primary annular packing member into axially slidable engagement with the inner surface of the seat, which may be made of stainless steel. Since a large frictional resistance acts on the sliding surfaces, a shear force is produced at the boundary between the outer or exposed part of the primary packing member which protrudes from the associated groove and the remaining inner part in the groove. If the shear force is excessive, the packing member may be damaged.

When the valve is closed, the annular packing members are restrained and compressed by the valve seat surfaces. When the valve opens, the packing members are freed from restraint, so that their outer parts swell or dilate. The dilatation of the outer parts may increase remarkably with the pressure fluctuation and/or temperature change of the liquid flowing through the valve when the valve is open. If the outer part of the primary packing member has greatly swelled when the first valve plug transfers or shifts from its open state to its closing action, the forced engagement of the outer part with the inner surface of the seat applies an excessive shear force to the outer part. The outer part may consequently be damaged in a short time.

The ratio of the volume of the outer part to that of the inner part is relational to the dilatation of the outer part due to the pressure fluctuation and/or temperature change of the liquid flowing through the valve. The larger in volume the inner part is as compared with the outer part, the smaller the dilatation of the outer part is. In addition, if the outer part of the primary annular packing member is partially restrained when the first valve plug is open, the outer part can be restrained from swelling when the plug opens.

EP-A-0 174 384 discloses a double sealed valve according to the preamble of claim 1.

### SUMMARY OF THE INVENTION

In view of the above, it is a primary object of the present invention to provide a double sealed valve, which includes a valve plug holding an annular packing member for slidable engagement with the valve seat, the packing member being improved in durability by reducing as much as possible the shear force acting on the exposed part of the packing member when the plug shifts from its open position to its closing action.

The object is achieved by a double sealed valve having the features which are recited in claim 1.

Preferred embodiments of the invention are indicated in the dependent claims.

### BRIEF DESCRIPTION OF THE DRAWINGS

A preferred embodiment of the present invention is shown in the accompanying drawings, in which:
Fig. 1 is an axial cross section of the lower half below the line a - a of a double sealed valve according to the invention;
Fig. 2 is an axial cross section of the upper half above the line a - a of the valve;
Fig. 3 is an enlarged fragmentary view in axial cross section of the valve fully closed;
Fig. 4 is an enlarged fragmentary view in axial cross section of the valve transferring from the fully closed state to an open state;
Fig. 5 is an enlarged fragmentary view in axial cross section of the valve fully opened;
Fig. 6 is an enlarged fragmentary view in axial cross section of the valve partially opened with the first valve plug slightly open and the second valve plug closed;
Fig. 7 is an enlarged fragmentary view in axial cross section of the valve partially opened with the second valve plug slightly open and the first valve plug closed;
Fig. 8 is an enlarged perspective view of a ring in the valve for forming a spiral liquid flow;
Fig. 9(A) is an enlarged fragmentary view in axial cross section of the valve, showing the primary annular packing member of the first valve plug opened;
Fig. 9(B) is an enlarged fragmentary view in axial cross section of the valve fully closed, showing the primary annular packing member of the first valve plug closed;
Fig. 9(C) is an enlarged fragmentary view in axial cross section of the valve still closed, showing a top edge of the primary annular packing member engaging with the inner conical surface of the second valve plug;
Fig. 10 is an enlarged partial view in axial cross section of the valve, showing the annular passage for washing liquid defined between the first and second valve stems;
Fig. 11 is a partial view in axial cross section of the valve, showing the annular passages for washing liquid each defined between the outer periphery of one of the valve stems and the inner periphery of the associated annular member;
Fig. 12(A) is an enlarged fragmentary view in axial cross section of the valve, showing the clearance between the second valve plug and the valve seat;
Fig. 12(B) is an enlarged fragmentary view in axial cross section of the valve, showing the clearance between the first valve plug and the valve seat;
Fig. 13 is an enlarged fragmentary view in axial cross section of the valve, showing the valve plugs and seat having conical surfaces for defining the clearances between them.

### DETAILED DESCRIPTION OF THE EMBODIMENT

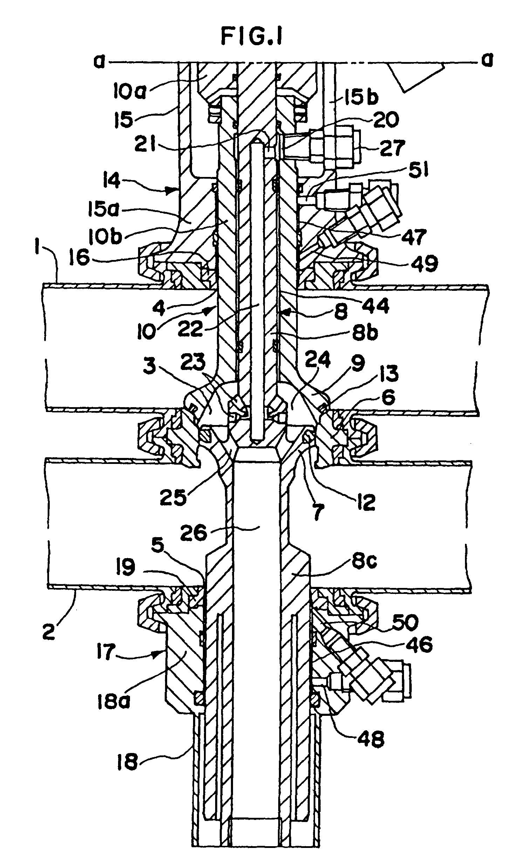

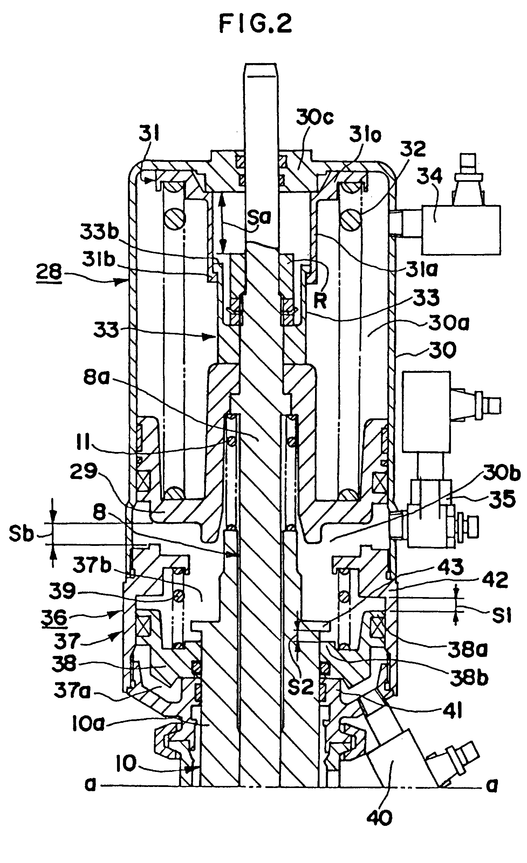

With reference to Figs. 1 and 2, the double sealed valve is circular in cross section and has a vertical axis. An upper passage 1 and a lower passage 2 extend horizontally either in parallel to or across each other. The passages 1 and 2 are interconnected by a communicating passage 3, which is defined by a valve seat 6. The upper passage 1 has a top opening 4 formed through its wall. The lower passage 2 has a bottom opening 5 formed through its wall. The communicating passage 3 and the openings 4 and 5 are circular in cross section and coaxial with the vertical axis. One of a drink and a washing liquid flows through each of the passages 1 and 2.

A first valve stem 8 is circular in cross section and coaxial with the vertical axis. The first stem 8 extends through the openings 4 and 5 and the communicating passage 3. The first stem 8 integrally includes a middle cylindrical stem part 8b, which extends through the top opening 4, and a lower cylindrical stem part 8c, which extends through the bottom opening 5. Formed between the stem parts 8b and 8c is a first valve plug 7, which is integral and coaxial with them. The plug 7 can engage with the inner periphery of the valve seat 6. The first stem 8 also includes an upper solid stem part 8a normally in coaxial screwed engagement with the top of the middle stem part 8b (in Figs. 1 and 2, the stem parts 8a and 8b are shown as formed integrally with each other).

A cylindrical second valve stem 10 coaxially surrounds part of the upper stem part 8a of the first valve stem 8 and the middle stem part 8b. This second stem 10 includes an upper stem part 10a and a lower stem part 10b in coaxial screwed engagement with each other. The lower stem part 10b has a second valve plug 9 formed integrally at its bottom. The second stem 10 is urged downward by a first coil spring 11, as stated later, so that the second plug 9 compressively engages with an upper surface of the valve seat 6 and is positioned over the first valve plug 7. The plugs 9 and 7, the seat 6 and the bottom of the middle stem part 8b define an annular space 24.

As apparent from all Figs. 1 - 13, the first valve plug 7 has an annular groove 7a formed in its outer periphery. The groove 7a holds a primary annular packing member 12 for tight but slidable contact with an inner peripheral surface 6a of the valve seat 6. The second valve plug 9 has an annular groove 9a formed in its bottom. The groove 9a holds a secondary annular packing member 13 for compressive contact with the upper conical surface 6b of the seat 6. Provided at the top opening 4 of the upper passage 1 is an upper annular member 14, through which the lower stem part 10b of the second valve stem 10 is guided slidably. The upper annular member 14 includes the root 15a of a yoke 15. The root 15a has a packing member 16 on its bottom for tight but slidable engagement with the lower stem part 10b. Provided at the bottom opening 5 of the lower passage 2 is a lower annular member 17, through which the lower stem part 8c of the first valve stem 8 is guided slidably. The lower annular member 17 includes the thick root 18a of a sleeve 18. The root 18a has a packing member 19 on its top for tight but slidable engagement with the lower stem part 8c.

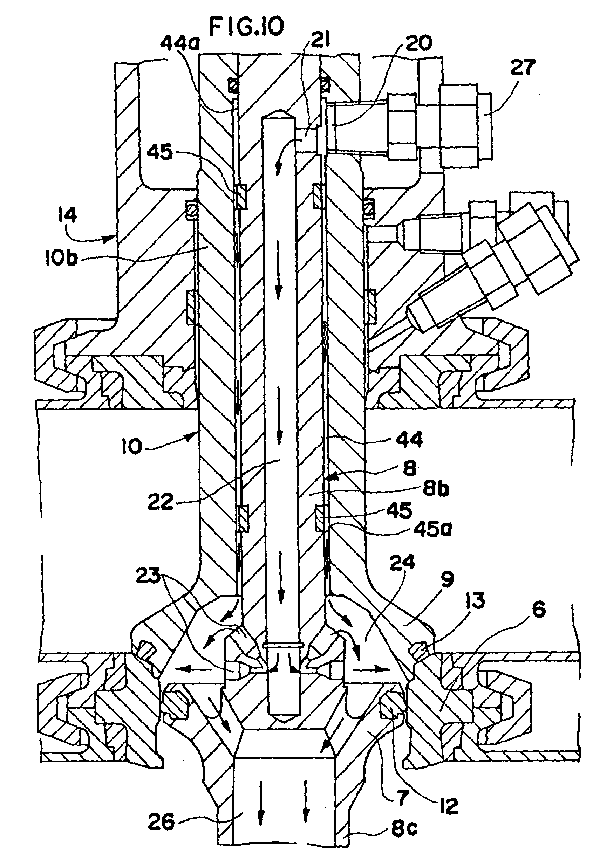

As best shown in Fig. 10, the middle stem part 8b of the first valve stem 8 has an axial bore 22 formed in it. The middle stem part 8b also has an upper communicating hole 21 and a number of lower orifices 23. The hole 21 and orifices 23 are formed through the cylindrical wall of the stem part 8b and communicate with the inside passage 22. Some of the orifices 23 extend radially and the others extend at an angle with them. The lower stem part 10b of the second valve stem 10 has a supply port 20 formed through its cylindrical wall, which communicates with the hole 21 of the first valve stem 8 when the second valve plug 9 engages with the valve seat 6. Fitted to the port 20 is a nozzle 27 for connection with a hose (not shown) for supplying a washing liquid. The nozzle 27 extends through the window 15b in the yoke 15. A washing liquid is supplied through the hose, the nozzle 27 and the supply port 20. Part of the liquid is introduced through the hole 21 into the inside passage or bore 22 and discharged through the orifices 23.

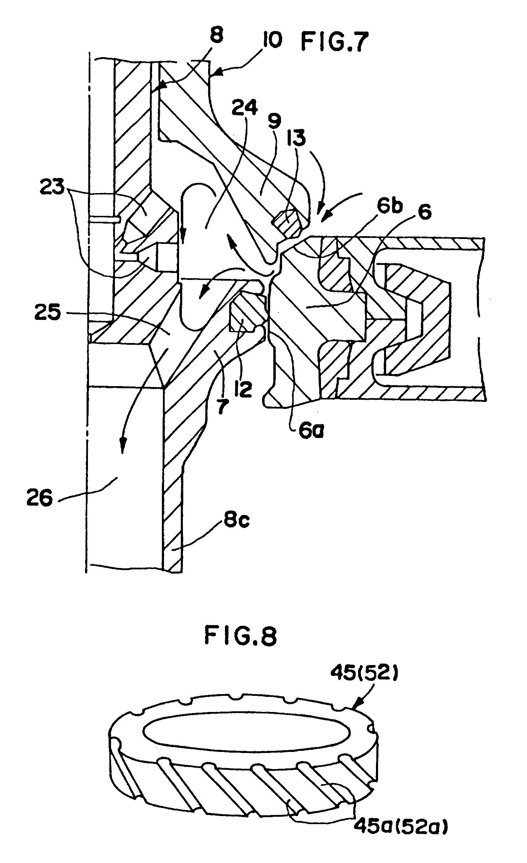

An annular passage 44 is defined between the outer periphery of the middle stem part 8b of the first valve stem 8 and the inner periphery of the lower stem part 10b of the second valve stem 10. The other part of the washing liquid supplied through the supply port 20 is introduced positively into the annular passage 44 and discharged at the bottom of the middle stem part 8b. The annular passage 44 includes a top part 44a, which has a little larger diameter to introduce the liquid from the port 20 effectively into the communicating hole 21 and the annular passage 44. Fitted to the outer periphery of the middle stem part 8b are two or more rings 45 of fluororesin at upper and lower positions in the annular passage 44. As shown in Fig. 8, each ring 45 has spiral grooves 45a formed at circumferentially regular intervals in its outer periphery to form into a spiral or helical flow the liquid introduced into the annular passage 44.

For example, 70 % of the washing liquid supplied through the supply port 20 flows through the communicating hole 21 of into the axial inside passage 22, while 30 % flows through the annular passage part 44a into the annular passage 44. The liquid in the inside passage 22 is ejected through the bottom orifices 23 into the annular space 24. The ejected liquid washes the inside of the space 24, which includes the inner periphery of the valve seat 6 and the inner surfaces of the valve plugs 7 and 9. Then, the liquid is discharged through the holes 25 formed in the first valve stem 8 and through the bore 26 in the lower stem part 8c to the outside. On the other hand, the liquid in the annular passage 44 flows through the spiral grooves 45a of the rings 45, where it is formed into a spiral flow. The spiral flow completely washes the inside of the annular passage 44 and is discharged through the annular space 24, the holes 25 and the bore 26 to the outside.

Thus, by supplying a washing liquid through the supply port 20, it is possible to wash the inner periphery of the valve seat 6 and the inner surfaces of the valve plugs 7 and 9. At the same time, it is possible to automatically and completely wash the clearance for sliding between the outer periphery of the middle stem part 8b of the first valve stem 8 and the inner periphery of the lower stem part 10b of the second valve stem 10. The washing liquid introduced into the annular passage 44 is formed into a spiral flow through the rings 45. The spiral flow can more effectively wash the interior of the passage 44.

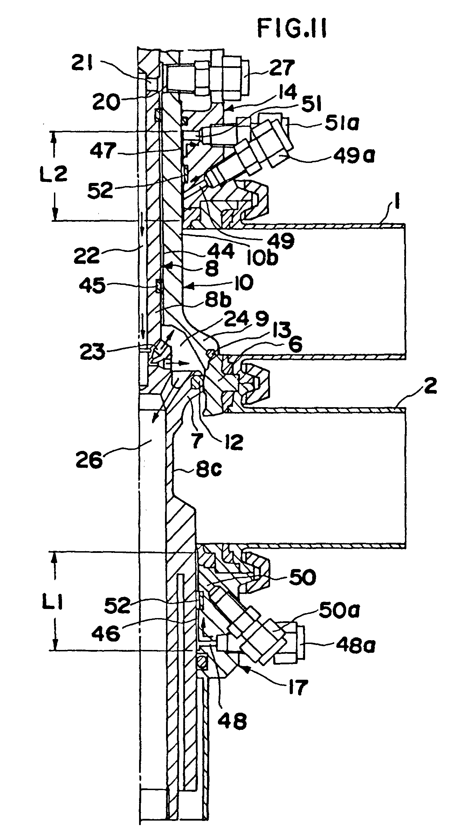

With reference to Figs. 1 and 11, a lower annular passage 46 is defined between the outer periphery of the lower stem part 8c of the first valve stem 8 which extends downward from the lower passage 2 and the inner periphery of the lower annular member 17, which guides this stem part. Another upper annular passage 47 is defined between the outer periphery of the lower stem part 10b of the second valve stem 10 which extends upward from the upper passage 1 and the inner periphery of the upper annular member 14, which guides this stem part. The passages 46 and 47 have lengths L1 and L2 respectively, which are longer than the maximum strokes of the stems 8 and 10 respectively. The lower and upper passages 46 and 47 have supply ports 48 and 49 formed in their respective bottoms, and discharge ports 50 and 51 formed in their respective tops. The supply ports 48 and 49 are smaller in diameter than the discharge ports 50 and 51 respectively. Fitted to the supply ports 48 and 49 are nozzles 48a and 49a respectively for connection with hoses (not shown) for supplying a washing liquid. Fitted to the discharge ports 50 and 51 are nozzles 50a and 51a respectively for connection with hoses (not shown) for discharging the liquid.

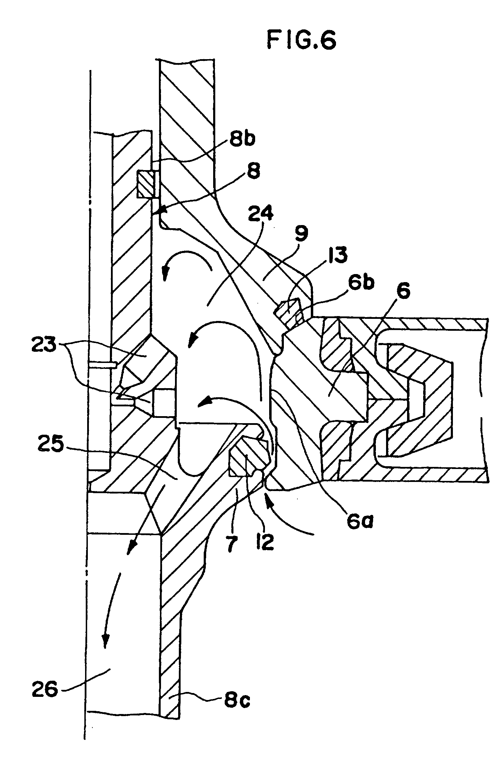

As stated above, the lower and upper annular passages 46 and 47 are longer than the maximum strokes of the valve stems 8 and 10 respectively. Figs. 1, 3, 10 and 11 show the first stem 8 in a lower position, where the first valve plug 7 is closed. Fig. 5 shows both stems 8 and 10 in their upper limit positions, where both plugs 7 and 9 are open, and where a top portion of the lower stem part 10b protrudes above the upper annular member 14 and is exposed to the air. Fig. 6 shows both stems 8 and 10 in their lower limit positions, where the first plug 7 is open and the second plug 9 is closed, and where a bottom portion of the lower stem part 8c protrudes below the lower annular member 17 and is exposed to the air. When the first stem 8 moves from its lower limit position to its upper limit position, its exposed bottom portion does not enter the lower passage 2. When the second stem 10 moves from its upper limit position to its lower limit position, its exposed top portion does not enter the upper passage 1. Thus, since the overall strokes of the first and second stems 8 and 10 are covered by the lower and upper annular passages 46 and 47 inside the lower and upper annular members 17 and 14 respectively, it is possible to securely prevent the exposed portions of the stems 8 and 10 from entering the passages 2 and 1 respectively. In addition, the portions of the stems 8 and 10 which have been exposed to the air in any valve position or state can be washed immediately by supplying the annular passages 46 and 47 with a washing liquid through the ports 48 and 49 respectively. It is therefore possible to cope quickly and adequately with pollution.

As shown in Fig. 11, the annular members 14 and 17 each hold a ring 52 of fluororesin, which is positioned in the associated annular passage 46 or 47. As shown in Fig. 8, the ring 52 has spiral grooves 52a formed at circumferentially regular intervals in its outer periphery to form into a spiral flow the washing liquid introduced into the passage 46 or 47.

In order to wash the lower stem part 8c of the first valve stem 8 which extends downward from the lower passage 2, as shown in Fig. 11, a pressurized washing liquid is supplied through the supply port 48. The liquid sufficiently washes the outer periphery of the stem part 8c while flowing through the lower annular passage 46. Then, the liquid is discharged through the discharge port 50. The liquid flowing through the lower annular passage 46 is formed into a spiral flow through the spiral grooves 52a of the lower ring 52. The spiral flow can effectively wash the outer periphery of the stem part 8c. Likewise, to wash the second valve stem 10, a pressurized washing liquid is supplied through the supply port 49. The liquid sufficiently washes the outer periphery of the lower stem part 10b while flowing through the upper annular passage 47. Then, the liquid is discharged through the discharge port 51. The liquid is formed into a spiral flow through the upper ring 52. The spiral flow can effectively wash the outer periphery of the stem part 10b. Since the discharge ports 50 and 51 are larger in diameter than the supply ports 48 and 49 respectively, it is possible to effectively discharge the liquid from the annular passages 46 and 47 to the discharge ports 50 and 51 respectively.

With reference to Fig. 2, a first valve drive mechanism 28 for operating the valve plugs 7 and 9 comprises an air cylinder, which includes a fixed cylinder 30 and a piston 29 for reciprocation in the cylinder 30. The piston 29 is fixed to the upper solid stem part 8a as the piston rod. The first compression spring 11 is interposed between the piston 29 and the upper stem part 10a of the second valve stem 10. The first spring 11 urges the first valve stem 8 upward and the second valve stem 10 downward. In the cylinder 30, an annular spring bearing 31 is placed at the top of the cylinder around the piston rod 8a. A second compression spring 32 and a stopper 33 are interposed between the bearing 31 and piston 29. The second spring 32 has a larger force than the first spring 11. The stopper 33 is fixed to the piston rod 8a, and telescopically engages with the spring bearing 31 to limit the extension of the second spring 32 to a certain range. A stroke setting ring R is fitted around the rod 8a between the stopper 33 and the top wall 30c of the cylinder 30. The spring bearing 31 includes a ringlike body 31o, which bears one end of the second spring 32, and a lower cylindrical part 31a formed coaxially and integrally with the body 31o. The stopper 33 is fixed in position around the piston rod 8a. The stopper 33 includes an upper cylindrical part 33a in slidable engagement with the cylindrical bearing part 31a. The cylindrical parts 31a and 33a have end flanges 31b and 33b respectively for mutual engagement to interconnect the spring bearing 31 and stopper 33. Normally as shown in Fig. 2, the urging force of the second spring 32 engages the flanges 31b and 33b with each other to keep the spring bearing 31 and stopper 33 extended to the full extent. This limits further extension of the second spring 32.

The cylinder 30 has ports 34 and 35 for supplying air to and discharge air from the upper and lower chambers 30a and 30b on both sides of the piston 29.

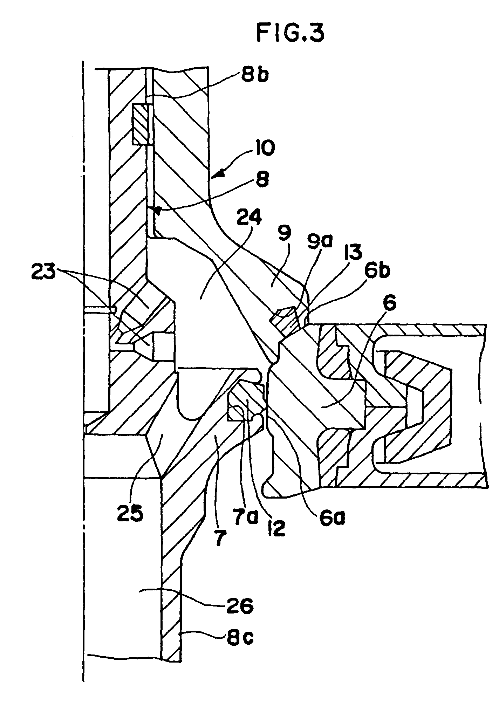

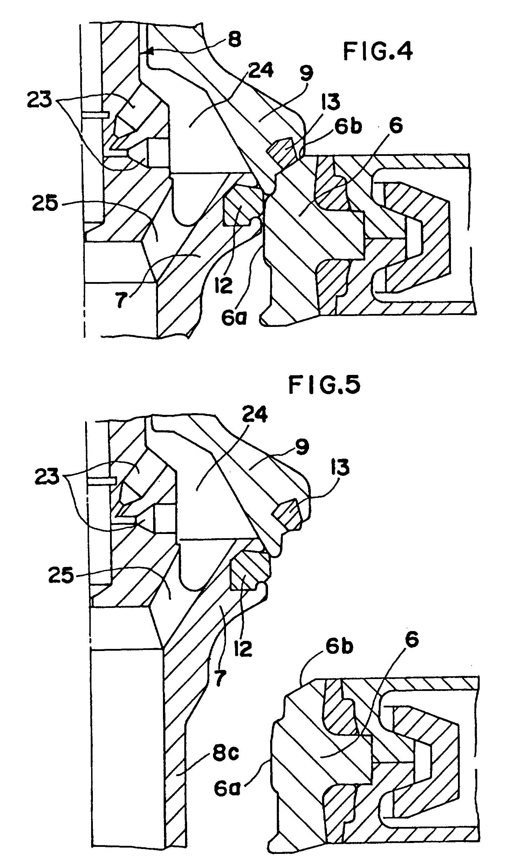

As stated above, the first spring 11 urges the first valve stem 8 upward and the second valve stem 10 downward. When no pressurized air is supplied to either of the upper and lower chambers 30a and 30b, as best shown in Fig. 3, the valve is in the fully closed state in which the first valve plug 7 engages through its primary packing member 12 with the inner peripheral surface 6a of the valve seat 6 while the second valve plug 9 engages through its secondary packing member 13 with the upper seat surface 6b. If pressurized air is supplied through the port 35 to the lower chamber 30b of the cylinder 30, the piston 29 moves upward together with the first valve stem 8 against the compressive force of the second spring 32. This retracts the cylindrical part 33a of the stopper 33 into the cylindrical part 31a of the spring bearing 31. While the first stem 8 is moving upward, as shown in Fig. 4, the top of the first valve plug 7 contacts with the bottom of the inner periphery of the second valve plug 9. The first stem 8 keeps moving up, lifting the mutually contacting plugs 7 and 9 away from the valve seat 6. When the stroke setting ring R contacts with the cylinder top wall 30c, the piston 29 reaches its upper limit position, so that the valve is fully open, as shown in Fig. 5, with both plugs 7 and 9 open.

If the air in the lower chamber 30b of the cylinder 30 is discharged when the valve is fully open, the force of the second spring 32 moves the piston 29 downward while the spring bearing 31 is pressed on the cylinder top wall 30c. This lowers the valve stems 8 and 10, so that the valve plugs 7 and 9 return to the fully closed state shown in Fig. 3. The ring R sets or adjusts the stroke Sa (Fig. 2) of the piston 29 between the fully closed position (Fig. 3) and the fully open position (Fig. 5).

If pressurized air is supplied through the port 34 to the upper chamber 30a of the cylinder 30 when the valve is fully closed as shown in Figs. 1 and 2, the pressure rise in the upper chamber 30a lowers the piston 29 with the first valve stem 8 against the compressive force of the first spring 11, since the stopper 33 limits the extension of the second spring 32. This slides the primary packing member 12 of the first valve plug 7 downward on the inner peripheral surface 6a of the valve seat 6. The piston 29 and first stem 8 stop moving down when the piston contacts with the top of a second cylinder 37, which is explained later. In this lower limit position of the first stem 8, the first plug 7 has left the seat surface 6a and is slightly open, while the second plug 9 is still closed, so that the valve is partially open as shown in Fig. 6. It is thus possible to open only the first plug 7 by lowering the first stem 8 solely or alone with pressurized air supplied to the upper chamber 30a. The first stem 8 can reciprocate with the piston 29 within the stroke Sb (Fig. 2) independently from the second stem 10.

Positioned under the first valve drive mechanism 28 is a second valve stem drive mechanism 36, which has an air cylinder. This drive mechanism 36 includes the second cylinder 37, which is connected to the bottom of the fixed cylinder 30 of the first drive 28. The drive mechanism 36 also includes a second piston 38, which is fitted slidably around the upper stem part 10a for reciprocation within a specified stroke in the second cylinder 37. The second piston 38 is urged into its lower limit position by a third compression spring 39. The second piston 38 defines a lower chamber 37a and an upper chamber 37b on its both sides in the second cylinder 37. The upper chamber 37b communicates with the lower chamber 30b of the fixed cylinder 30. The drive mechanism 36 has a port 40 for supplying air to and discharging air from the lower chamber 37a.

The downward movement of the second piston 38 is limited by a stopper 41, which is formed on the bottom wall of the second cylinder 37. The upward movement of the second piston 38 is limited by a stopper 42, which is formed on the top of the second cylinder 37. The second piston 38 can reciprocate between the stoppers 41 and 42 within the stroke S1, which is the space between the upper stopper 42 and the outer peripheral part 38a of the second piston 38 as positioned on the lower stopper 41. The upper stem part 10a of the second valve stem 10 has a stopper 43 formed on it above the second piston 38. The stroke S1 is longer than the axial play S2 defined between this second stopper 43 and the central part 38b of the second piston 38 when the second stem 10 and the second piston 38 are in their lower limit positions (Fig. 2). The upward movement of the second piston 38 by the stroke S1 lifts the second stem 10 against the force of the first spring 11 by the difference (S1 minus S2) between the stroke S1 and play S2. It is thus possible to make the compressive force of the second spring 32 act securely on the second stem 10 by defining between the central part 38b of the second piston 38, which is urged into the lower limit position by the third spring 39, and the second stopper 43 on the second stem 10, which is urged into the lower limit position by the second spring 32, the axial play S2 shorter than the stroke S1 of the second piston 38.

If pressurized air is supplied through the port 40 to the lower chamber 37a of the second cylinder 37 when the second piston 38 is kept in its lower limit position shown in Fig. 2, this second piston 38 starts to move upward. Until the central part 38b of the second piston 38 contacts with the second stopper 43 on the second valve stem 10, this second stem 10 is kept in its lower limit position, where the second valve plug 9 is closed. After the piston part 38b contacts with the second stopper 43, the upward movement of the second piston 38 lifts the second stem 10. The second piston 38 keeps moving up until its peripheral part 38a contacts with the upper stopper 42. In the upper limit position of the second stem 10, the second plug 9 is slightly open, while the first plug 7 is still closed, so that the valve is partially open as shown in Fig. 7. If the air in the chamber 37a is discharged, the second piston 38 is lowered by the third spring 39 until it contacts with the lower stopper 41, while the second stem 10 is lowered by the second spring 32 until the second plug 9 is closed.

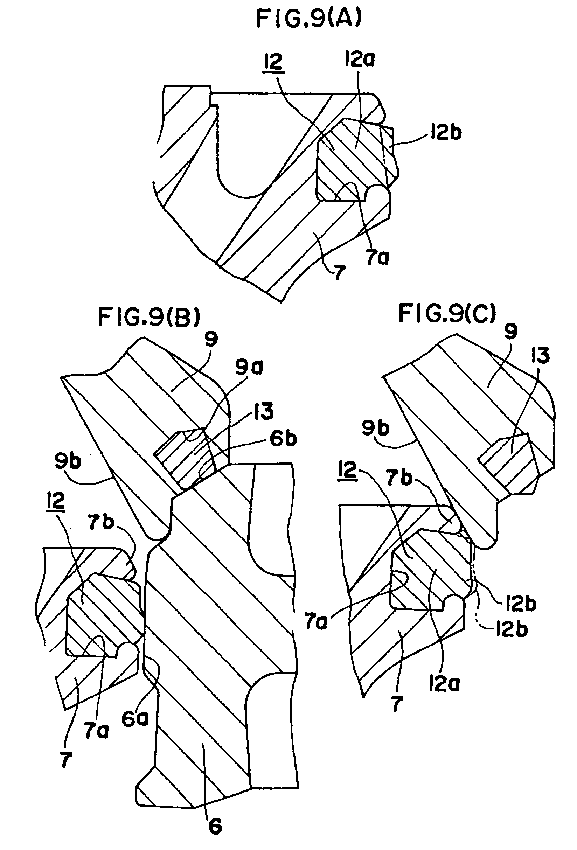

The first valve plug 7 and the primary annular packing member 12 fitted to it are explained below with reference to Figs. 9(A) - 9(C).

As shown in Fig. 9(A), the primary annular packing member 12 includes an inner part 12a, which is fitted in the annular groove 7a of the first valve plug 7, and an outer part 12b, which protrudes from the groove 7a. The inner part 12a is sufficiently (8 - 10 times) larger than the outer part 12b in axially cross-sectional area taken radially. Fig. 9(B) shows the valve in the fully closed state, in which the packing member 12 engages compressively with the inner peripheral surface 6a of the valve seat 6 and is compressed between the seat 6 and plug 7.

The ratio of the volume of the outer part to the volume of the inner part is relational to the dilatation of the outer part due to a pressure fluctuation and/or a temperature rise of the liquid flowing through the valve when the valve is open. The larger the volume of the inner part is in relation to that of the outer part, the smaller the dilatation of the outer part is. It is therefore possible to lower the dilatation of the outer part 12b of the primary packing member 12 by making the inner part 12a sufficiently larger in cross section than the outer part 12b, as stated above. Consequently, when the first valve plug 7 opening as shown in Fig. 5 moves downward and transfers to the closed state shown in Figs. 3 and 9(B), the dilatation of the outer part 12b due to a pressure fluctuation and/or a temperature rise of the liquid flowing through the valve is limited to a value as low as possible. This reduces as much as possible the shear force acting on the outer part 12b when the primary packing member 12 comes into engagement with the inner peripheral surface 6a of the seat 6. As a result, the primary packing member 12 is prevented from being damaged or broken.

Fig. 9(C) shows in cross section the primary annular packing member 12 when the first valve plug 7 which was closed moves upward, lifting the second valve plug 9, and both plugs 7 and 9 leave the valve seat 6 so that the valve gets into the fully opened state. The upward movement of the first valve stem 8 brings the top 7b of the first plug 7 into contact with a lower part of the inner conical surface 9b of the second plug 9, which expands or diverges downward. As a result, the top edge of the outer part 12b of the primary packing member 12 engages with the conical surface 9b just below the plug top 7b. Thus, when the valve is fully open, the top edge of the outer part 12b engages with the conical surface 9b, so that the surface 9b partially restrains the outer part 12b. This restrains the outer part 12 from swelling due to a pressure fluctuation and/or a temperature rise of the liquid flowing through the valve. If the outer part 12b is heated or pressurized (compressed) by the liquid when its top edge is in engagement with the conical surface 9b, as shown by solid lines in Fig. 9(C), the edge deforms upward along the surface 9b so as to be less restrained. It is consequently possible to prevent the overall outer part 12b from radially swelling and deforming as shown by the two-dot chain line in Fig. 9(C).

As stated above, the inner part 12a of the primary annular packing member 12, which is fitted in the groove 7a, is sufficiently larger in cross section than the outer part 12b. As also stated, the top edge of the outer part 12b engages with the lower part of the inner conical surface 9b of the second valve plug 9 when the valve is fully open. This reduces as much as possible the shear force acting on the outer part 12b when the first valve plug 7 transfers from the fully open state to a closing action. It is consequently possible to improve the durability of the packing member 12.

The primary annular packing member 12 of the first valve plug 7 is made of rubber in which a required amount of fluororesin is mixed. This can reduce the sliding frictional resistance of the primary packing member 12 and improve its durability. The inner peripheral surface 6a of the valve seat 6 is covered by a coating or lining layer of fluororesin to improve the durability of the surface 6a.

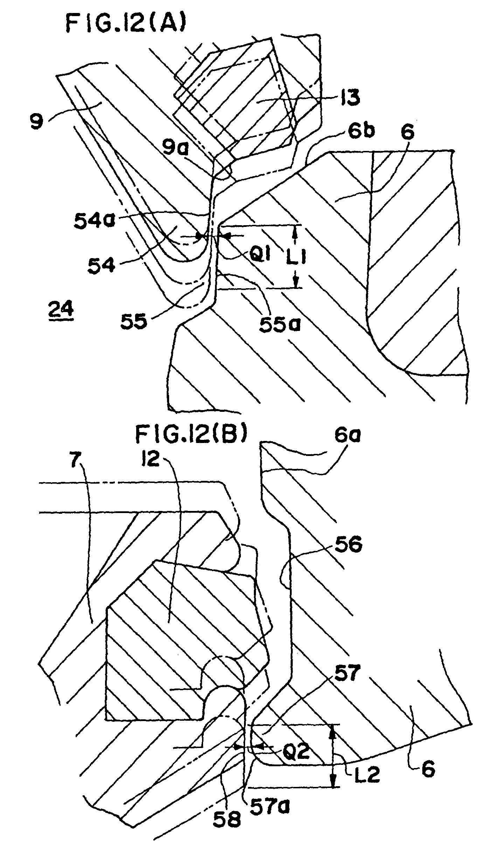

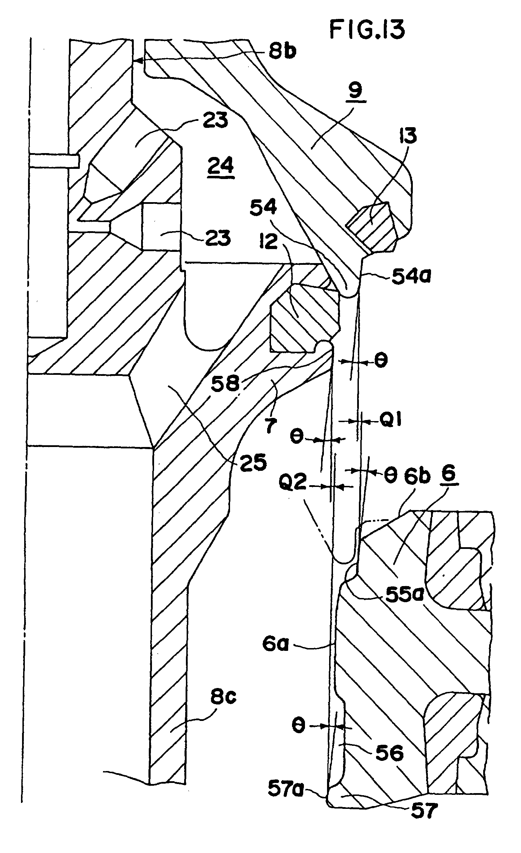

Structural features of the valve plugs 7 and 9 and the valve seat 6 are explained below with reference to Figs. 12(A), 12(B) and 13.

When the valve is partially open, as shown in Fig. 12(A), with the second valve plug 9 slightly open, a slight clearance Q1 is defined between the second plug 9 and the valve seat 6 over the required opening stroke L1 of the second plug 9. Specifically, the second plug 9 has an inclined circumferential surface 9a, which faces the upper conical surface 6b of the valve seat 6. The second plug 9 also has an annular bottom 54 protruding over a required length below the inclined surface 9a. The seat 6 has an inner annular recess 55 formed below the conical surface 6b, which the plug bottom 54 can enter. The clearance Q1 is defined between the outer peripheral surface 54a of the plug bottom 54 and the circumferential surface 55a of the seat recess 55 nearly constantly over the opening stroke L1 of the second plug 9.

If the valve is partially open with the first valve plug 7 closed and the second valve plug 9 open slightly as shown in Fig. 12(A) while, for example, a washing liquid and a drink are flowing through the upper passage 1 and lower passage 2, respectively, and if the stroke of the second valve stem 10 is set properly, it is assumed that the second plug 9 is positioned as shown by solid lines in Fig. 12(A). Even if a minus error occurs in the stroke of the second stem 10, so that the second plug 9 is positioned above the proper position, as shown by the dashed line in Fig. 12(A), or if a plus error occurs in the stroke, so that the second plug 9 is positioned below the proper position, no pressure is applied to the space in the valve, which is the annular chamber 24, since the clearance Q1 is nearly constant over the stroke L1, as apparent from Fig. 12(A), so that the quantity of the liquid flowing in through the clearance Q1 is nearly constant.

As shown in Fig. 12(B), a slight clearance Q2 is defined between the first valve plug 7 and valve seat 6 over the required opening stroke L2 of the first plug 7 when the first plug 7 is open. Specifically, the seat 6 has a bottom 57 of a smaller inner diameter and an inner annular groove 56 formed between the bottom 57 and peripheral surface 6a. The clearance Q2, which is nearly constant over the stroke L2, is defined between the inner peripheral surface 57a of the bottom 57 and the outer peripheral surface 58 of the bottom of the first plug 7.

If the valve is partially open with the second valve plug 9 closed and the first valve plug 7 open slightly as shown in Fig. 12(B) while, for example, a washing liquid and a drink are flowing through the passages 2 and 1, respectively, and if the stroke of the first valve stem 8 is set properly, it is assumed that the first plug 7 is positioned as shown by solid lines in Fig. 12(B). Even if an error occurs in the stroke of the first stem 8, so that the second plug 9 is positioned above or below the proper position, as shown by dashed or two-dot chain lines in Fig. 12(B), no pressure is applied to the annular chamber 24 because the clearance Q2 is nearly constant over the stroke L2, as apparent from Fig. 12(B), so that the quantity of the liquid flowing in through the clearance Q2 is nearly constant.

The peripheral or circumferential surfaces 54a and 55a of the second valve plug 9 and valve seat 6, which define the clearance Q1, might be cylindrical in parallel to each other. If these surfaces were cylindrical, however, they might contact with each other. The surfaces should therefore be gently conical. Likewise, the peripheral surfaces 58 and 57a of the first valve plug 7 and the seat 6, which define the clearance Q2 should be gently conical. Fig. 13 shows the surfaces 54a, 55a, 57a and 58 being conical and diverging upward at an angle θ of 10 ° to the vertical axis.

Thus, even if an error occurs in the stroke of the second valve stem 10 when, for example, a washing liquid and a drink are flowing through the upper passage 1 and lower passage 2, respectively, and the valve is partially open with the first valve plug 7 closed and the second valve plug 9 open slightly for washing by allowing a washing liquid to flow from the upper passage 1 into the space in the valve, a slight clearance is defined, no pressure is applied to the space in the valve, because a slight clearance is defined between the second plug 9 and seat 6 over the required opening stroke of the second plug 9 when the second plug 9 opens, so that the quantity of the liquid flowing in through the clearance is nearly constant. Therefore, no washing liquid is mixed into the drink, so that the drink can be kept safe. If the peripheral surfaces of the second plug 9 and seat 6 which define the clearance are conical, they do not contact with each other, so that the open state of the valve can be maintained securely.

When no pressurized air is supplied to the lower chamber 30b of the fixed cylinder 30 of the first valve drive mechanism 28, the double sealed valve is fully closed, as shown in Figs. 1 - 3, with both valve plugs 7 and 9 closed. Specifically, in such a condition, the first plug 7 engages through the primary annular packing member 12 tightly but slidably with the inner peripheral surface 6a of the valve seat 6, while the first spring 11 urges the second valve stem 10 downward so that the second plug 9 engages through the secondary annular packing member 13 compressively with the upper conical surface 6b of the seat 6. Consequently, the communicating passage 3 between the upper passage 1 and lower passage 2 is sealed doubly with the first plug 7 adjacent to the lower passage 2 and the second plug 9 adjacent to the upper passage 1. Therefore, the liquids flowing through the passages 1 and 2, respectively, are prevented from mixing with each other.

If pressurized air is supplied to the lower chamber 30b of the fixed cylinder 30, the first valve plug 7 moves upward, as shown in Fig. 4, lifting the second valve plug 9. The plugs 7 and 9 keep moving up together until they are sufficiently away above the valve seat 6, as shown in Fig. 5, so that the valve is fully open. This opens the communicating passage 3, through which the upper passage 1 and lower passage 2 can communicate with each other.

When a highly viscous liquid or another liquid difficult to wash out is used, one of the valve plugs 7 and 9 is closed and the other is opened slightly. While the packing member of the open valve plug is washed with a washing liquid, the liquid is discharged. For example, when a highly viscous drink and a washing liquid flow through the upper passage 1 and lower passage 2, respectively, pressurized air is supplied to the upper chamber 30a of the fixed cylinder 30. The pressure rise in the upper chamber 30a lowers the piston 29 together with the second spring 32, the extension of which is limited. Consequently, the first valve stem 8 and the first plug 7 move downward with the primary annular packing member 12 sliding downward on the inner peripheral surface 6a of the valve seat 6. When the piston 29 has reached its bottom position, the valve is partially open, as shown in Fig. 6, with the first plug 7 having left the surface 6a to be open slightly and the second plug 9 still closed. As shown by arrows in Fig. 6, a washing liquid flows from the lower passage 2, through the clearance between the first plug 7 and seat 6 and into the annular chamber 24, which is defined by the plugs 7 and 9, the seat 6 and the middle stem part 8b of the first valve stem 8. The flowing liquid washes the primary packing member 12, the surfaces of the first plug 7 near the member 12, and the inside of the chamber 24. Then, the liquid is discharged through the bore 26 in the lower stem part 8c to the outside.

When a highly viscous drink and a washing liquid flow through the lower passage 2 and upper passage 1, respectively, pressurized air is supplied to the lower chamber 37a of the second cylinder 37 of the second valve drive mechanism 36 to lift the second piston 38. While moving up, the second piston 38 lifts the second valve stem 10 by the specified stroke (S1 - S2). When the second piston 38 has reached its top position, the valve is partially open, as shown in Fig. 7, with only the second valve plug 9 slightly open. As shown by arrows in Fig. 7, a washing liquid flows from the upper passage 1, between the second plug 9 and the upper conical surface 6b of the valve seat 6, and into the annular chamber 24, in which it circles or flows round. As a result, the liquid washes the secondary annular packing member 13, the surfaces of the second plug 9 near the member 13, and the inside of the chamber 24. Thereafter, the liquid is discharged through the bore 26 in the lower stem part 8c of the first valve stem 8 to the outside.

Since only one piston 29 is provided in the fixed cylinder 30, and it is fixed to the piston rod, the first valve drive mechanism 28 needs only one air-tight seal. Therefore, the mechanism is simple in structure and easy to make. In addition, the operation of the piston 29 cannot be out of order, and accordingly the valve operation cannot be wrong.

As stated already, the second valve drive mechanism 36 is provided under the first valve drive mechanism 28. If pressurized air is supplied to the lower chamber 37a of the second cylinder 37 when the second piston 38 is kept in its lower limit position, the upward movement of the second piston 38 lifts the second valve stem 10, so that the valve is partially open with only the second valve plug 9 open. If the air in the chamber 37a is discharged, the third spring 39 lowers the second piston 38, so that the first spring 11 lowers the second stem 10 to close the second plug 9. The second cylinder 37 is so formed under the fixed cylinder 30 as to communicate with the fixed cylinder 30, without interposing a partition as was the case with the conventional apparatus. Therefore, the apparatus of the present invention can be simple and compact in structure, and is accordingly easy to make.

## Claims

1. A double sealed valve comprising:
an annular valve seat (6) in a communicating passage (3) formed between an upper passage (1) and a lower passage (2);
a first vertical valve stem (8) and a second vertical valve stem (10), which is hollow, slidably surrounds said first valve stem (8) and is urged downward by a first spring (11);
said first valve stem (8) having a first circular valve plug (7), which holds a primary annular packing member (12) for slidable engagement with an inner peripheral surface (6a) of said valve seat (6);
said second valve stem (10) having a second circular valve plug (9), which holds a secondary annular packing member (13) for compressive engagement with an upper surface (6b) of said valve seat (6); and
a valve drive mechanism (28) connected to said first valve stem (8) so as to move said first valve stem (8) and said first valve plug (7) upwardly for opening said valve, followed by said second valve stem (10) and said second valve plug (9) ;
said first valve plug (7) having an annular groove (7a), said primary packing member (12) consisting of an inner part (12a), which is fitted in said groove (7a), and an outer part (12b), which protrudes from said groove (7a) ;
**characterised in that**
said inner part (12a) of said primary packing member (12) is sufficiently larger than said outer part (12b) thereof in axially sectional area taken radially, and said outer part (12b) of said primary packing member (12) has a top edge engaging with the bottom of an inner conical surface (9b) diverging downward of said second valve plug (9) when said valve opens, so as to restrain said outer part (12b) from being dilated by pressure fluctuation and/or temperature change of liquid when said valve opens.

2. A double sealed valve according to claim 1, wherein said primary annular packing member (12) is made of rubber into which a required amount of fluororesin is mixed.

3. A double sealed valve according to claim 1 or 2, wherein said inner peripheral surface (6a) of the valve seat (6) is coated or lined with fluororesin.

4. A double sealed valve according to claim 1, wherein said valve drive mechanism (28) comprises an air cylinder which includes a fixed vertical cylinder (30) and a piston (29) for reciprocation in said cylinder, which piston (29) is fixed to said first valve stem (8) as the piston rod, said piston (29) defining an upper chamber (30a) and a lower chamber (30b) in said fixed cylinder (30), and said fixed cylinder (30) having ports (34) and (35) for supplying air to and discharging air from said upper and lower chambers (30a) and (30b), respectively;
said first spring (11) being interposed between said piston (29) and said second valve stem (10);
a spring bearing (31) placed at the top of the space in said fixed cylinder (30);
a second spring (32) interposed between said bearing (31) and said piston (29), said second spring (32) having a larger force than said first spring (11); and
a stopper (33) interposed between said bearing (31) and said piston (29), said stopper (33) being fixed to said piston rod and connected in vertically telescopic relationship with said bearing (31) to limit the extension of said second spring (32) to a certain range.

5. A double sealed valve according to claim 4, further comprising a valve stem drive mechanism (36) under said valve drive mechanism (28), said valve stem drive mechanism (36) comprising an air cylinder, which includes a second vertical cylinder (37) formed under said fixed cylinder (30) and communicating with the bottom of said fixed cylinder (30), a second piston (38) slidably surrounding said second valve stem (10) for reciprocation by a specified stroke (S1) in said second cylinder (37), and a third spring (39) urging said second piston (38) into a lower limit position, said second piston (38) defining a second lower chamber (37a) thereunder in said second cylinder (37), said second cylinder (37) having a port (40) for supplying air to and discharging air from said second lower chamber (37a), whereby the upward movement of said second piston (38) by supplying air to said second lower chamber (37a) lifts said second valve stem (10) against the urging force of said first spring (11) to open said second valve plug (9).

6. A double sealed valve according to Claim 5, wherein said second piston (38) includes a central part (38b), said second valve stem (10) having a second stopper (43) fixed thereto and positioned above said second piston (38), said central part (38b) and said second stopper (43) being spaced axially by a play (S2) when said second piston (38) is urged into the lower limit position by said third spring (39) and when said second valve stem (10) and said second valve plug (9) are urged into the closed position by said first spring (11), the play (S2) being shorter than the stroke (S1) of said second piston (38) so that the stroke of said second valve stem (10) is the stroke (S1) of said second piston (38) minus the play (S2) (S1 - S2).

7. A double sealed valve according to claim 1, wherein
said second valve stem (10) has a supply port (20) formed through the tubular wall thereof;
said first valve stem (8) having an inside passage (22) and orifices (23), which interconnect a bottom part of said inside passage (22) and the outside of said first valve stem (8);
whereby a washing liquid can be supplied through said supply port (20) and said inside passage (22) and ejected out through said orifices (23);
the outer peripheral surface of said first valve stem (8) and the inner peripheral surface of said second valve stem (10) defining an annular passage (44) therebetween for positively introducing and discharging from the bottom of said second valve stem (10) a part of the liquid supplied through said supply port (20).

8. A double sealed valve according to claim 7, further comprising a ring (45) in said annular passage (44) between said first and second valve stems (8) and (10), said ring (45) having a number of spiral grooves (45a) formed in the outer peripheral surface thereof for forming into a spiral flow the liquid introduced into said annular passage (44).

9. A double sealed valve according to claim 1, wherein said second valve plug (9) and said valve seat (6) define a slight clearance (Q1) therebetween over the required opening stroke (L1) of said second valve plug (9) when said second valve plug (9) opens.

10. A double sealed valve according to claim 9, wherein the surfaces of said second valve plug (9) and said valve seat (6) which define the slight clearance (Q1) are conical.

11. A double sealed valve according to Claim 9, wherein said first valve plug (7) and said valve seat (6) define a second slight clearance (Q2) therebetween over the required opening stroke (L2) of said first valve plug (7) when said first valve plug (7) opens.

12. A double sealed valve according to Claim 11, wherein the surfaces of said first valve plug (7) and said valve seat (6) which define the second slight clearance (Q2) are gently conical.

13. A double sealed valve according to claim 1, further comprising:
an upper annular member (14) for slidably guiding the outer peripheral surface of the upper part of said second valve stem (10) which extends upward from said upper passage (1),
said outer peripheral surface of the second valve stem (10) and the inner peripheral surface of said upper annular member (14) defining an upper annular passage (47) therebetween, which is longer than the maximum stroke of said second valve stem (10); and
a lower annular member (17) for slidably guiding the outer peripheral surface of the lower part of said first valve stem (8) which extends downward from said lower passage (2);
said outer peripheral surface of the first valve stem (8) and the inner peripheral surface of said lower annular member (17) defining a lower annular passage (46) therebetween, which is longer than the maximum stroke of said first valve stem (8);
said annular passages (46, 47) having supply ports (48) and (49) respectively of small diameters, which are formed at their bottoms, for supplying washing liquid to said annular passages (46, 47); and
said annular passages (46, 47) also having discharge ports (50) and (51) respectively of large diameters, which are formed at their tops, for discharging washing liquid from said annular passages (46, 47).

14. A double sealed valve according to claim 13, further comprising a ring (52) in each of said annular passages (46, 47), said ring (52) having a number of spiral grooves (52a) formed in the outer peripheral surface thereof for forming into a spiral flow the liquid supplied to the associated annular passage.

## Patentansprüche

1. Doppelsitzventil, welches aufweist:
einen kreisringförmigen Ventilsitz (6) in einem Verbindungskanal (3), der zwischen einem oberen Kanal (1) und einem unteren Kanal (2) vorgesehen ist;
einen ersten vertikalen Ventilschaft (8) und einen zweiten vertikalen Ventilschaft (10), der hohl ist, gleitbeweglich den ersten Ventilschaft (8) umgibt, und durch eine erste Feder (11) nach unten gedrückt wird;
wobei der erste Ventilschaft (8) einen ersten, kreisförmigen Ventilstopfen (7) aufweist, der ein primäres, kreisringförmiges Dichtungsteil (12) so haltert, dass es im Gleiteingriff mit einer Innenumfangsoberfläche (6a) des Ventilsitzes (6) steht;
der zweite Ventilschaft (10) einen zweiten, kreisförmigen Ventilstopfen (9) aufweist, der ein zweites, kreisringförmiges Dichtungsteil (13) so haltert, dass es im Druckeingriff mit einer oberen Oberfläche (6b) des Ventilsitzes (6) steht;
einen Ventilantriebsmechanismus (28), der so mit dem ersten Ventilschaft (8) verbunden ist, dass er den ersten Ventilschaft (8) und den ersten Ventilstopfen (7) nach oben bewegt, um das Ventil zu öffnen, gefolgt von dem zweiten Ventilschaft (10) und dem zweiten Ventilstopfen (9);
wobei der erste Ventilstopfen (7) eine kreisringförmige Nut (7a) aufweist, und das primäre Dichtungsteil (12) aus einem inneren Teil (12a) besteht, das in die Nut (7a) eingepasst ist, sowie einem äußeren Teil (12b), welches gegenüber der Nut (7a) vorspringt;
**dadurch gekennzeichnet, dass**
das innere Teil (12a) des primären Dichtungsteils (12) ausreichend größer ist als dessen äußeres Teil (12b) in axialer Schnittfläche, radial verlaufend, und das äußere Teil (12b) des primären Dichtungsteils (12) einen oberen Rand aufweist, der mit dem Boden einer inneren, kegelförmigen Oberfläche (9b) im Eingriff steht, die nach unterhalb des zweiten Ventilstopfens (9) auseinander läuft, wenn das Ventil öffnet, um so das äußere Teil (12b) daran zu hindern, durch Druckschwankung und/oder Temperaturänderung einer Flüssigkeit aufgeweitet zu werden, wenn das Ventil öffnet.

2. Doppelsitzventil nach Anspruch 1, bei welchem dasprimäre, kreisringförmige Dichtungsteil (12) aus Gummi besteht, in welches eine erforderliche Menge an Fluorharz eingemischt ist.

3. Doppelsitzventil nach Anspruch 1 oder 2, bei welchem die innere Umfangsoberfläche (6a) des Ventilsitzes (6) mit Fluorharz beschichtet oder abgedeckt ist.

4. Doppelsitzventil nach Anspruch 1, bei welchem der Ventilantriebsmechanismus (28) einen Luftzylinder aufweist, der mit einem festen, vertikalen Zylinder (30) und einem zur Hin- und Herbewegung in dem Zylinder ausgebildeten Kolben (29) versehen ist, wobei der Kolben (29) an dem ersten Ventilschaft (8) als der Kolbenstange befestigt ist, der Kolben (29) eine obere (30a) und eine untere Kammer (30b) in dem festen Zylinder (30) ausbildet, und der feste Zylinder (30) Öffnungen (34) und (35) aufweist, um Luft der oberen und unteren Kammer (30a) bzw. (30b) zuzuführen bzw. von diesen Kammern abzuführen;
wobei die erste Feder (11) zwischen dem Kolben (29) und dem zweiten Ventilschaft (10) angeordnet ist;
ein Federlager (31) an der Oberseite des Raums in den festen Zylinder (30) angeordnet ist;
eine zweite Feder (32) zwischen dem Lager (31) und dem Kolben (29) angeordnet ist, wobei die zweite Feder (32) eine höhere Kraft aufweist als die erste Feder (11); und
ein Anschlag (33) zwischen dem Lager (31) und dem Kolben (29) angeordnet ist, wobei der Anschlag (33) an der Kolbenstange befestigt ist, und in Vertikalrichtung teleskopartig aus- und einfahrbar mit dem Lager (31) verbunden ist, um das Ausfahren der zweiten Feder (32) auf einen bestimmten Bereich zu begrenzen.

5. Doppelsitzventil nach Anspruch 4, welches weiterhin einen Ventilschaftantriebsmechanismus (36) unter dem Ventilantriebsmechanismus (28) aufweist, wobei der Ventilschaftantriebsmechanismus (36) einen Luftzylinder aufweist, der einen zweiten, vertikalen Zylinder (37) aufweist, der unter dem festen Zylinder (30) vorgesehen ist, und mit dem Boden des festen Zylinders (30) in Verbindung steht, einen zweiten Kolben (38), der gleitbeweglich den zweiten Ventilschaft (10) umgibt, zur Hin- und Herbewegung um einen festgelegten Hub (S1) in dem zweiten Zylinder (37), und eine dritte Feder (39), welche den zweiten Kolben (38) in eine untere Grenzlage drückt, wobei der zweite Kolben (38) eine zweite, untere Kammer (37a) darunter in dem zweiten Zylinder (37) ausbildet, und der zweite Zylinder (37) eine Öffnung (40) aufweist, um Luft der zweiten, unteren Kammer (37a) zuzuführen und von dieser abzuführen, wobei die Aufwärtsbewegung des zweiten Kolbens (38) durch Zufuhr von Luft zu der zweiten, unteren Kammer (37a) den zweiten Ventilschaft (10) gegen die Beaufschlagungskraft der ersten Feder (11) anhebt, um den zweiten Ventilstopfen (9) zu öffnen.

6. Doppelsitzventil nach Anspruch 5, bei welchem der zweite Kolben (38) ein zentrales Teil (38b) aufweist, der zweite Ventilschaft (10) einen zweiten Anschlag (43) aufweist, der daran befestigt ist, und oberhalb des zweiten Kolbens (38) angeordnet ist, wobei das zentrale Teil (38b) und der zweite Anschlag (43) in Axialrichtung durch ein Spiel (S2) beabstandet sind, wenn der zweite Kolben (38) in die untere Grenzlage durch die dritte Feder (39) gedrückt wird, und wenn der zweite Ventilschaft (10) und der zweite Ventilstopfen (9) in die geschlossene Lage durch die erste Feder (11) gedrückt werden, wobei das Spiel (S2) kürzer ist als der Hub (S1) des zweiten Kolbens (38), so dass der Hub des zweiten Ventilschaftes (10) gleich dem Hub (S1) des zweiten Kolbens (38) minus dem Spiel (S2) ist (S1 - S2).

7. Doppelsitzventil nach Anspruch 1, bei welchem
der zweite Ventilschaft (10) eine Zufuhröffnung (20) aufweist, die sich durch seine rohrförmige Wand erstreckt;
der erste Ventilschaft (8) einen innenseitigen Kanal (22) und Öffnungen (23) aufweist, welche ein Bodenteil des innenseitigen Kanals (22) und die Außenseite des ersten Ventilschaftes (8) verbinden;
wodurch eine Waschflüssigkeit durch die Zufuhröffnung (20) und den innenseitigen Kanal (22) zugeführt werden kann, und durch die Öffnungen (23) ausgestoßen werden kann;
wobei die Außenumfangsoberfläche des ersten Ventilschaftes (8) und die Innenumfangsoberfläche des zweiten Ventilschaftes (10) dazwischen einen kreisringförmigen Kanal (44) ausbilden, um wirksam einen Teil der Flüssigkeit, die durch die Zufuhröffnung (20) zugeführt wurde, einzubringen und von dem Boden des zweiten Ventilschaftes (10) auszustoßen.

8. Doppelsitzventil nach Anspruch 7, welches weiterhin einen Ring (45) in dem kreisförmigen Kanal (44) zwischen dem ersten und dem zweiten Ventilschaft (8) bzw. (10) aufweist, wobei der Ring (45) mit einer Anzahl an Spiralnuten (45a) versehen ist, die in seiner Außenumfangsoberfläche angeordnet sind, um die Flüssigkeit, die in den kreisringförmigen Kanal (44) eingeführt wird, in einen spiralförmigen Fluss umzuwandeln.

9. Doppelsitzventil nach Anspruch 1, bei welchem der zweite Ventilstopfen (9) und der Ventilsitz (6) einen kleinen Spalt (Q1) zwischen sich über den erforderlichen Öffnungshub (L1) des zweiten Ventilstopfens (9) ausbilden, wenn der zweite Ventilstopfen (9) öffnet.

10. Doppelsitzventil nach Anspruch 9, bei welchem die Oberflächen des zweiten Ventilstopfens (9) und des Ventilsitzes (6), welche den kleinen Spalt (Q1) ausbilden, kegelförmig sind.

11. Doppelsitzventil nach Anspruch 9, bei welchem der erste Ventilstopfen (7) und der Ventilsitz (6) zwischen sich einen zweiten, kleinen Spalt (Q2) über den erforderlichen Öffnungshub (L2) des ersten Ventilstopfens (7) ausbilden, wenn der erste Ventilstopfen (7) öffnet.

12. Doppelsitzventil nach Anspruch 11, bei welchem die Oberflächen des ersten Ventilstopfens (7) und des Ventilsitzes (6), welche den zweiten, kleinen Spalt (Q2) ausbilden, leicht kegelförmig sind.

13. Doppelsitzventil nach Anspruch 1, welches weiterhin aufweist:
ein oberes, kreisförmiges Teil (14) zur gleitbeweglichen Führung der Außenumfangsoberfläche des oberen Teils des zweiten Ventilschaftes (10), der von dem oberen Kanal (1) nach oben verläuft,
wobei die Außenumfangsoberfläche des zweiten Ventilschaftes (10) und die Innenumfangsoberfläche des oberen, kreisringförmigen Teils (14) dazwischen einen oberen, kreisringförmigen Kanal (47) ausbilden, der länger ist als der Maximalhub des zweiten Ventilschaftes (10); und
ein unteres kreisringförmiges Teil (17) zur gleitbeweglichen Führung der Außenumfangsoberfläche des unteren Teils des ersten Ventilschaftes (8), der von dem unteren Kanal (2) nach unten verläuft;
wobei die Außenumfangsoberfläche des ersten Ventilschaftes (8) und die Innenumfangsoberfläche des unteren, kreisringförmigen Teils (17) zwischen sich einen unteren, kreisringförmigen Kanal (46) ausbilden, der länger ist als der Maximalhub des ersten Ventilschaftes (8);
die kreisringförmigen Kanäle (46, 47) Zufuhröffnungen (48) und (49) aufweisen, die jeweils einen kleinen Durchmesser haben, und an ihren Böden vorgesehen sind, um Waschflüssigkeit den kreisringförmigen Kanälen (46, 47) zuzuführen; und
die kreisringförmigen Kanäle (46, 47) weiterhin Auslassöffnungen (50) und (51) aufweisen, die jeweils einen großen Durchmesser haben, und an ihren Oberseiten vorgesehen sind, um Waschflüssigkeit aus den kreisringförmigen Kanälen (46, 47) auszustoßen.

14. Doppelsitzventil nach Anspruch 13, welches weiterhin einen Ring (52) in jedem der kreisringförmigen Kanäle (46, 47) aufweist, wobei in der Außenumfangsoberfläche des Rings (52) eine Anzahl spiralförmiger Nuten (52a) vorgesehen ist, um die Flüssigkeit, die dem zugehörigen, kreisringförmigen Kanal zugeführt wird, in einen spiralförmigen Fluss umzuwandeln.

## Revendications

1. Soupape à double siège, comprenant :
un siège annulaire (6) de soupape dans un passage de communication (3) formé entre un passage supérieur (1) et un passage inférieur (2) ;
une première tige verticale (8) de soupape et une deuxième tige verticale (10) de soupape, qui est creuse, entoure de manière coulissante ladite première tige (8) de soupape et est poussée vers le bas par un premier ressort (11) ;
ladite première tige (8) de soupape ayant un premier obturateur circulaire (7) de soupape, qui retient un élément de garniture annulaire primaire (12) destiné à être de manière coulissante au contact d'une surface périphérique intérieure (6a) dudit siège (6) de soupape ;
ladite deuxième tige (10) de soupape ayant un deuxième obturateur circulaire (9) de soupape, qui retient un élément de garniture annulaire secondaire (13) destiné à être de manière compressive au contact d'une surface périphérique intérieure (6b) dudit siège (6) de soupape ; et
un mécanisme d'entraînement (28) de soupape accouplé avec ladite première tige (8) de soupape afin de faire monter ladite première tige (8) de soupape et ledit premier obturateur (7) de soupape pour ouvrir ladite soupape, suivie par ladite deuxième tige (10) de soupape et ledit deuxième obturateur (9) de soupape ;
ledit premier obturateur (7) de soupape ayant une gorge annulaire (7a), ledit élément de garniture primaire (12) étant constitué par une partie intérieure (12a), logée dans ladite gorge (7a), et une partie extérieure (12b) qui dépasse de ladite gorge (7a) ;
**caractérisée en ce que**
ladite partie intérieure (12a) dudit élément de garniture primaire (12) a une section transversale axiale, prise radialement, suffisamment plus grande que ladite partie extérieure (12b) de celui-ci et ladite partie extérieure (12b) dudit élément de garniture primaire (12) a un bord supérieur au contact du bas d'une surface intérieure conique (9b) divergeant vers le bas dudit deuxième obturateur (9) de soupape lorsque ladite soupape s'ouvre, de façon à empêcher la dilatation de ladite partie extérieure (12b) par suite d'une fluctuation de pression et/ou d'une variation de température de liquide lors de l'ouverture de ladite soupape.

2. Soupape à double siège selon la revendication 1, dans laquelle ledit élément de garniture annulaire primaire (12) est en caoutchouc mélangé à une quantité requise de résine fluorée.

3. Soupape à double siège selon la revendication 1 ou 2, dans laquelle ladite surface périphérique intérieure (6a) du siège (6) de soupape est revêtue ou doublée de résine fluorée.

4. Soupape à double siège selon la revendication 1, dans laquelle ledit mécanisme d'entraînement (28) de soupape comprend un cylindre à air comprimé qui comporte un cylindre vertical fixe (30) et un piston (29) destiné à aller et venir dans ledit cylindre, lequel piston (29) est fixé à ladite première tige (8) de soupape en tant que tige de piston, ledit piston (29) définissant dans ledit cylindre fixe (30) une chambre supérieure (30a) et une chambre inférieure (30b) et ledit cylindre fixe (30) ayant des orifices (34) et (35) pour envoyer de l'air dans et refouler de l'air respectivement depuis lesdites chambres supérieure et inférieure (30a) et (30b) ;
ledit premier ressort (11) étant intercalé entre ledit piston (29) et ladite deuxième tige (10) de soupape ;
un appui (31) de ressort placé dans le haut de l'espace dans ledit cylindre fixe (30);
un deuxième ressort (32) intercalé entre ledit appui (31) et ledit piston (29), ledit deuxième ressort (32) ayant une force plus grande que celle dudit premier ressort (11); et
une butée (33) intercalée entre ledit appui (31) et ledit piston (29), ladite butée (33) étant fixée à ladite tige de piston et étant accouplée d'une manière verticalement télescopique par rapport audit appui (31) pour limiter dans une certaine mesure la détente dudit deuxième ressort (32).

5. Soupape à double siège selon la revendication 4, comprenant en outre un mécanisme d'entraînement (36) de tige de soupape sous ledit mécanisme d'entraînement (28) de soupape, ledit mécanisme d'entraînement (36) de tige de soupape comprenant un cylindre à air comprimé qui comporte un deuxième cylindre vertical (37) formé sous ledit cylindre fixe (30) et communiquant avec le bas dudit cylindre fixe (30), un deuxième piston (38) entourant de manière coulissante ladite deuxième tige (10) de soupape pour exécuter une course d'allée et venue donnée (S1) dans ledit deuxième cylindre (37), et un troisième ressort (39) poussant ledit deuxième piston (38) dans une position limite inférieure, ledit deuxième piston (38) définissant une deuxième chambre inférieure (37a) sous lui dans ledit deuxième cylindre (37), ledit deuxième cylindre (37) ayant un orifice (34) pour envoyer de l'air dans et refouler de l'air depuis ladite deuxième chambre inférieure (37a), grâce à quoi le mouvement de montée dudit deuxième piston (38), en envoyant de l'air dans ladite deuxième chambre inférieure (37a), soulève ladite deuxième tige (10) de soupape à l'encontre de la force de poussée dudit premier ressort (11) pour ouvrir ledit deuxième obturateur (9) de soupape.

6. Soupape à double siège selon la revendication 5, dans laquelle ledit deuxième piston (38) comporte une partie centrale (38b), ladite deuxième tige (10) de soupape ayant une deuxième butée (43) fixée à celle-ci et placée au-dessus dudit deuxième piston (38), ladite partie centrale (38b) et ladite deuxième butée (43) étant espacées de manière axiale par un jeu (S2) lorsque ledit deuxième piston (38) est poussé dans la position limite inférieure par ledit troisième ressort (39) et lorsque ladite deuxième tige (10) de soupape et ledit deuxième obturateur (9) de soupape sont poussés dans la position fermée par ledit premier ressort (11), le jeu (S2) étant plus court que la course (S1) dudit deuxième piston (38) de façon que la course de ladite deuxième tige (10) de soupape soit la course (S1) dudit deuxième piston (38) moins le jeu (S2) (S1 - S2).

7. Soupape à double siège selon la revendication 1, dans laquelle
ladite deuxième tige (10) de soupape comporte un orifice d'alimentation (20) formé à travers la paroi tubulaire de celle-ci ;
ladite première tige (8) de soupape ayant un passage intérieur (22) et des orifices (23), qui relient l'un à l'autre une partie inférieure dudit passage intérieur (22) et l'extérieur de ladite première tige (8) de soupape ;
grâce à quoi un liquide de lavage peut être fourni via ledit orifice d'alimentation (20) et ledit passage intérieur (22) et est expulsé par lesdits orifices (23);
la surface périphérique extérieure de ladite première tige (8) de soupape et la surface périphérique intérieure de ladite deuxième tige (10) de soupape définissant entre elles un passage annulaire (44)pour introduire et refouler directement depuis le bas de ladite deuxième tige (10) de soupape une partie du liquide fourni via ledit orifice de support (20).

8. Soupape à double siège selon la revendication 7, comprenant en outre une bague (45) dans ledit passage annulaire (44) entre lesdites première et deuxième tiges (8) et (10) de soupape, ladite bague (45) ayant dans sa surface périphérique extérieure un certain nombre de gorges (45a) en spirale pour donner un écoulement en spirale au liquide introduit dans ledit passage annulaire (44).

9. Soupape à double siège selon la revendication 1, dans laquelle le deuxième obturateur (9) de soupape et ledit siège (6) de soupape définissent entre eux un petit espace (Q1) sur la course d'ouverture requise (L1) dudit deuxième obturateur (9) de soupape lorsque s'ouvre ledit deuxième obturateur de soupape.

10. Soupape à double siège selon la revendication 9, dans laquelle les surfaces dudit deuxième obturateur (9) de soupape et dudit siège (6) de soupape qui définissent le petit espace (Q1) sont coniques.

11. Soupape à double siège selon la revendication 9, dans laquelle ledit premier obturateur (5) de soupape et ledit siège (6) de soupape définissent entre eux un petit espace (Q2) sur la course d'ouverture requise dudit premier obturateur (7) de soupape lorsque s'ouvre ledit premier obturateur (7) de soupape.

12. Soupape à double siège selon la revendication 11, dans laquelle les surfaces dudit premier obturateur (7) de soupape et dudit siège (6) de soupape qui définissent le deuxième petit espace (Q2) sont légèrement coniques.

13. Soupape à double siège selon la revendication 1, comprenant en outre :
un élément annulaire supérieur (14) pour guider de manière coulissante la surface périphérique extérieure de la partie supérieure de ladite deuxième tige (10) de soupape qui s'étend vers le haut depuis ledit passage supérieur (1),
ladite surface périphérique extérieure de la deuxième tige (10) de soupape et la surface périphérique intérieure dudit élément annulaire supérieur (14) définissant entre elles un passage annulaire supérieur (47) plus long que la course maximale de ladite deuxième tige (10) de soupape ; et
un élément annulaire inférieur (17) pour guider de manière coulissante la surface périphérique extérieure de la partie inférieure de ladite première tige (8) de soupape qui s'étend vers le bas depuis ledit passage inférieur (2) ;
ladite surface périphérique extérieure de la première tige (8) de soupape et la surface périphérique intérieure dudit élément annulaire inférieur (17) définissant entre elles un passage annulaire inférieur (46) plus long que la course maximale de ladite première tige (8) de soupape ;
lesdits passages annulaires (46, 47) ayant aussi des orifices de refoulement, respectivement (50) et (51), d'un petit diamètre, formés dans le haut de ceux-ci pour envoyer du liquide de lavage dans lesdits passages annulaires (46, 47) ; et
lesdits passages annulaires (46, 47) ayant aussi des orifices de refoulement, respectivement (50) et (51), d'un grand diamètre, formés dans le haut de ceux-ci pour envoyer du liquide de lavage dans lesdits passages annulaires (46, 47).

14. Soupape à double siège selon la revendication 13, comprenant en outre une bague (52) dans chacun desdits passages annulaires (46, 47), ladite bague (52) ayant un certain nombre de gorges (52a) en spirale formées dans la surface périphérique extérieure de celle-ci pour donner un écoulement en spirale au liquide envoyé dans le passage annulaire correspondant.
